# FASCICULE DE BREVET EUROPEEN

(11) **EP 1 453 687 B1**
(45) Date de publication et mention de la délivrance du brevet: **24.09.2008**
(21) Numéro de dépôt: 02791748.3
(22) Date de dépôt: 02.12.2002
(51) Int. Cl.: B60B 3/04

(54) **DISQUE DE ROUE AUTOMOBILE, NOTAMMENT POUR VEHICULE DE TOURISME**
SCHEIBE EINES KRAFTFAHRZEUGRADES, INSBESONDERE FÜR EINEN PERSONENKRAFTWAGEN
MOTOR VEHICLE WHEEL DISC, IN PARTICULAR FOR PRIVATE PASSENGER VEHICLE

(30) Priorité: 03.12.2001 FR 0115742
(43) Date de publication de la demande: 08.09.2004
(73) Titulaire: MEFRO ROUES FRANCE, 10600 La Chapelle St. Luc (FR)
(72) Inventeur: ALFF, Denis, F-63200 Riom (FR); KRUCHTEN, Wolfgang, F-63430 Les Martres d'Artiere (FR)
(74) Mandataire: Remy, Vincent Noel Paul
(86) Numéro de dépôt international: PCT/EP2002/013576
(87) Numéro de publication internationale: WO 2003/047882

(56) Documents cités:
- DE-A- 2 639 483
- DE-U- 20 108 995
- US-A- 6 042 194
- US-B1- 6 231 129

## Description

L'invention a pour objet un disque de roue automobile à bras, notamment pour véhicule de tourisme, réalisé en une seule pièce à partir de tôle emboutie qui présente un excellent compromis en terme de poids, coût, style ou de liberté d'effet de style possible rapporté (enjoliveur par exemple).

Lors de la conception d'une roue en tôle pour véhicule automobile, on s'intéresse d'une manière générale à l'optimisation en poids et en coût d'un tel produit. L'évolution des techniques d'emboutissage, des moyens de simulation numérique et des matériaux a conduit à de très grands progrès au court des dernières années. Cependant, la majorité des produits est restée dans une logique de disque sensiblement axisymétrique (c'est-à-dire dont le profil en coupe est à peu près figé dans la zone de galbe), comprenant des ajours et parfois des bossages dans la partie haute.

Ce type de profil ne confère pas au produit un style ou une image très valorisante ce qui explique dans la grande majorité des cas que l'on ait recours à un enjoliveur placé sur le produit lorsqu'il est monté sur le véhicule.

On dénombre plusieurs tentatives de création de style directement à partir de la tôle constitutive du disque de roue en pratiquant des zones à emboutissage profond constituant des raidisseurs et/ou un assemblage particulier du disque avec la jante (assemblage sous siège, disque « full face » (i.e. disque dont le bord radialement extérieur inclut le crochet et le siège extérieurs de la jante), avec jante soudée en bout, etc.) et parfois associés à des effets liés à la peinture. Ces tentatives n'ont encore jamais conduit à une généralisation pour des raisons de poids excessif ou de difficultés de réalisation.

D'une manière générale, le marché des roues de style pour véhicule automobile de tourisme reste confiné dans l'utilisation d'alliages d'aluminium. Le procédé de réalisation (moulage, forgeage, etc.) de ces disques laisse une très forte liberté de style avec des poids raisonnables mais a pour contrepartie un coût de l'ordre de 4 à 8 fois (voire 10) supérieur.

Le document DE 201 08 995 U présente une roue dont le disque est réalisé à partir d'une seule pièce en tôle emboutie, avec une face interne et une face externe. Ce disque comprend une partie circulaire radialement extérieure d'assemblage destinée à être liée à une jante, une partie radialement intérieure de fixation et de centrage à un moyeu de roue avec une zone d'appui comportant un nombre donné de trous de fixation et terminée radialement intérieurement par un bord recourbé axialement extérieurement ou cheminée de centrage, et des bras reliant les parties intérieure et extérieure, chaque bras étant disposé sensiblement circonférentiellement entre deux trous de fixation adjacents et les bords libres radialement intérieurs de la partie circulaire radialement extérieure définissant avec les bords libres latéraux des bras des ajours. Ce disque a une zone d'appui sensiblement circulaire et plane et chaque bras comporte deux éléments de raidissement latéraux s'étendant radialement de ladite zone d'appui jusqu'à la partie circulaire radialement extérieure d'assemblage et disposés de part et d'autre d'une bande intermédiaire en retrait axialement vers l'extérieur du disque.

Si la liberté d'effet de style nu ou par pièce rapportée (enjoliveur par exemple) est apparemment obtenue, un tel disque présente l'inconvénient de nécessiter une tôle relativement épaisse pour pouvoir supporter les efforts en service, notamment dans la zone de liaison entre les bras et la partie radialement intérieure de fixation et de centrage du disque.

Dans ce qui suit, on entend par :
- « face interne » du disque, le côté du disque dirigé vers l'intérieur, en particulier, la face interne de la zone d'appui est destinée à être en contact avec la surface extérieure du moyeu auquel le disque doit être fixé ;
- « face externe » du disque, le côté du disque dirigé vers l'extérieur, c'est ce côté qui est visible lorsque la roue est montée sur un véhicule.

L'invention a pour objet un disque de roue similaire dans lequel, pour renforcer mécaniquement chaque bras, la zone centrale de chacun des bras est déformée pour ménager un renflement en retrait axialement extérieurement relativement aux zones latérales des bras du disque, ledit renflement s'étendant radialement à partir de la cheminée de centrage en incluant un pontet de la partie radialement intérieure de fixation et de centrage, le long de la partie centrale desdits bras et jusqu'à la partie circulaire extérieure d'assemblage et dans lequel ledit pontet est décalé axialement extérieurement relativement à la zone d'appui.

La géométrie particulière de la partie radialement intérieure de fixation et de centrage de ce disque a l'avantage de réduire les niveaux de contraintes maxima supportés par cette zone en service.

Selon un mode de réalisation avantageux, en considérant un plan axial médian entre deux trous de fixation adjacents, la distance axiale (e) séparant la face interne desdits pontets et la face interne de ladite zone d'appui est en tout point supérieure à l'épaisseur initiale de la tôle constitutive du disque de roue.

Selon un mode de réalisation préférentiel, les bras présentent des bords libres latéraux de découpe retournés vers la face interne du disque. De même, avantageusement, les bords libres radialement intérieurs de la partie circulaire d'assemblage sont rabattus vers la face interne du disque.

Selon une autre caractéristique préférentielle de l'invention, les bords des ajours sont obtenus par découpe de la tôle puis rabattement vers la face interne du disque. Cela a l'avantage de dégager un maximum de surface ajourée et de faire en sorte qu'aucune face de découpe ne soit visible du côté extérieur.

D'autre part l'esthétique ainsi obtenue est agréable et le fort ajourage apporte, outre une bonne ventilation des freins, une grande liberté de style ajouté (enjoliveur).

De préférence, les largeurs et profondeurs des renflements ainsi que les largeurs, sections et inerties de flexion des bras dans la direction circonférentielle peuvent diminuer continûment de la partie radialement intérieure vers la partie circulaire radialement extérieure.

L'objet de ces aménagement est de répartir au mieux la matière dans le bras là où elle est nécessaire pour réduire les contraintes de service en fonction des sollicitations auquel ce bras est soumis.

Chaque zone d'appui autour de chaque trou de fixation peut présenter au moins deux faces distinctes d'appui. Préférentiellement ces deux faces d'appui sont disposées radialement extérieurement et intérieurement relativement à l'axe d'un trou de fixation. Chacune de ces deux faces d'appui peut aussi être circonférentiellement divisée en deux de part et d'autre de l'axe dudit trou de fixation.

Avantageusement, le fond des renflements peut comporter des orifices découpés. Un tel orifice peut être un ajour standard ou servir pour la fixation d'une pièce de style comme un enjoliveur.

La forme finale des bras et des ajours des disques selon l'invention peut être obtenue simultanément en une ou plusieurs opérations d'emboutissage. De préférence, après avoir été découpés, les bords des ajours sont ébavurés sur une pièce emboutie avant d'être rabattus.

Enfin, le nombre de bras peut notamment être 3, 4, 5 ou 6.

L'invention décrit ainsi un disque de roue dont le poids et le procédé de réalisation sont similaires à ceux d'un disque acier classique optimisé pour un style se rapprochant de celui des disques en alliage moulé ou forgé.

L'invention a aussi pour objet une roue constituée par l'assemblage d'une jante et d'un disque selon l'invention.

Les disques de roue selon l'invention sont maintenant décrits à l'aide du dessin annexé dans lequel :
- la figure 1 est une vue en perspective d'une roue assemblée comportant un disque selon l'invention ;
- la figure 2 est une vue en coupe axiale de la roue de la figure 1, coupe traversant l'axe d'un trou de fixation ;
- les figures 3(a) à (c) présentent l'évolution de la section d'un bras du centre du disque vers l'extérieur ;
- la figure 4 est une vue en coupe du disque passant par les axes de deux trous de fixation adjacents ;
- la figure 5 est une vue en perspective de la face interne du disque ; et
- les figures 6, 7, 8 et 9 sont des agrandissements de l'un des trous de fixation de la figure 5 et présentent quatre variantes de réalisation des faces d'appui.

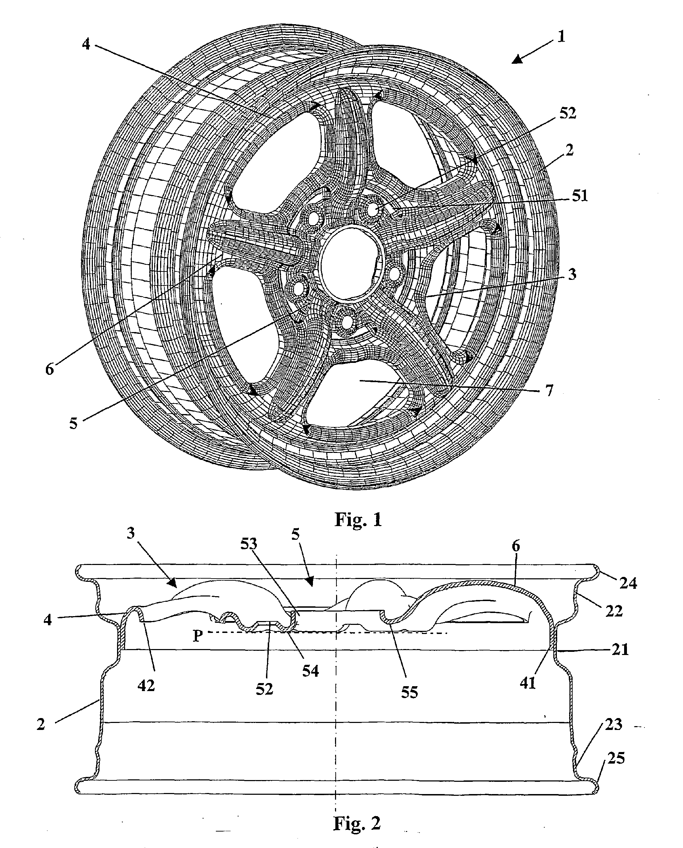

La figure 1 présente une vue en perspective du côté extérieur (ou face externe) d'une roue assemblée 1 comportant un disque 3 selon l'invention et une jante 2. La figure 2 est une coupe axiale de cette même roue passant par l'axe d'un trou de fixation. La jante 2 comprend usuellement deux crochets extérieur 24 et intérieur 25, deux sièges extérieur 22 et intérieur 23 et une gorge de montage 21.

Le disque 3 est fabriqué par un procédé de formage, notamment d'emboutissage, à partir d'un flan de tôle métallique composé de préférence d'acier à résistance élevée ou de feuillard d'aluminium. Les composants essentiels de ce disque 3 sont une partie circulaire radialement extérieure 4 d'assemblage, une partie radialement intérieure 5 de centrage et de fixation et des bras 6 de liaison entre les parties 4 et 5.

La partie 4 est la zone d'assemblage avec la jante 2 comme l'illustre la figure 2 et le bord radialement extérieur 41 de cette partie d'assemblage 4 a une direction sensiblement parallèle à l'axe de rotation du disque 3. Cette partie d'assemblage 4 est circulaire, c'est-à-dire continue circonférentiellement. L'assemblage à la jante 2 est usuellement réalisé par soudure. Cet assemblage peut avoir lieu au niveau de la gorge de montage 21 de la jante 2. Il est aussi possible d'avoir un assemblage sous le siège extérieur 22 de la jante 2.

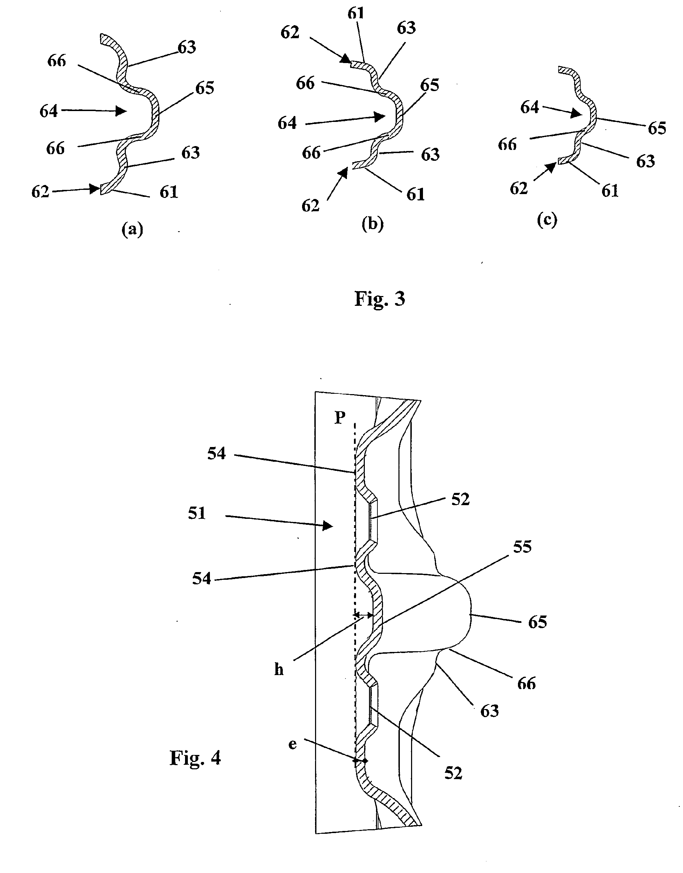

La partie de fixation et de centrage 5 comprend ici une zone d'appui 51 avec cinq trous de fixation 52 et un bord radialement intérieur recourbé axialement extérieurement en forme de collerette ou cheminée de centrage 53. Les trous de fixation 52 sont conçus pour recevoir des boulons de fixation du disque à un moyeu de véhicule. La face interne de la zone d'appui 51 comporte une face d'appui 54 destinée à venir en contact avec le moyeu du véhicule. Cette face d'appui 54 correspond au plan P. Comme le montre la figure 4, coupe du disque 3 entre deux trous de fixation 52 adjacents, la zone d'appui 51 (ainsi que la face d'appui 54) est interrompue entre les deux trous de fixation par un pontet 55. De préférence, la distance axiale h entre le plan P de la face d'appui 54 et la face intérieure du pontet 55, dans sa partie centrale, est supérieure à l'épaisseur e du flan de tôle métallique de départ. Cette épaisseur e est comprise entre 3 et 6 mm en fonction de la charge que doit supporter la roue considérée.

La géométrie particulière de ce pontet permet de répartir au mieux les efforts venant des bras vers les différentes faces d'appui situées de part et d'autre du bras dans la zone d'appui, en évitant les concentrations de contrainte en regard circonférentiellement dudit bras.

Les bras 6 relient les parties 4 et 5 et assurent la transmission des efforts entre ces deux parties du disque 3. Les bords latéraux 61 de ces bras 6 définissent avec le bord radialement intérieur 42 de la partie d'assemblage 4 des ajours 7 de grande taille.

La difficulté de réalisation d'un disque 3 de roue comportant des grands ajours 7 est de réaliser des bras 6 délimitant latéralement ces ajours suffisamment résistants aux sollicitations en fatigue qui apparaissent en fonctionnement.

Les figures 3(a) à (c) présentent l'évolution de la section d'un bras 6 de la zone de liaison avec la partie de fixation et de centrage 5 vers la partie d'assemblage 4. La section de ces bras 6 comprend deux zones latérales 63 avec deux bords latéraux 61 et un renflement 64 disposé au centre du bras axialement extérieurement avec un fond 65 et deux flancs 66 adjacents. Dans l'exemple de réalisation de la figure 1, chaque renflement 64 s'étend radialement à partir de la cheminée de centrage 53 en incluant un pontet 55, le long de la partie centrale des bras 6 et jusqu'à la partie circulaire extérieure d'assemblage 4. Les bords libres de découpe 62 des deux bords latéraux 61 des bras 6 sont rabattus vers l'intérieur du disque. La hauteur axiale du flanc de renforcement 66 du renflement 64 relativement aux deux zones latérales 63 ainsi que la largeur du fond 65 du renflement 64 diminuent progressivement lorsque la distance radiale avec l'axe du disque augmente. C'est ce que montrent les figures (a), (b) et (c).

Dans l'exemple décrit, l'ensemble des bords libres de découpe des bras 62 et de la partie d'assemblage 42 tout autour des ajours 7 sont rabattus vers la face interne du disque 3. Cela permet, outre un apport supplémentaire de rigidité, d'augmenter la surface des ajours 7 et donne un effet de style plus agréable en raison de la disparition des faces de découpe dont les arêtes vives sont peu esthétiques.

La zone 5 de fixation et de centrage est composée dans le disque de l'invention de zones d'appui 51 entourant chacune un trou de fixation 52, lesdites zones d'appui 51 adjacentes étant séparées par des pontets 55, ainsi qu'une cheminée de centrage 53.

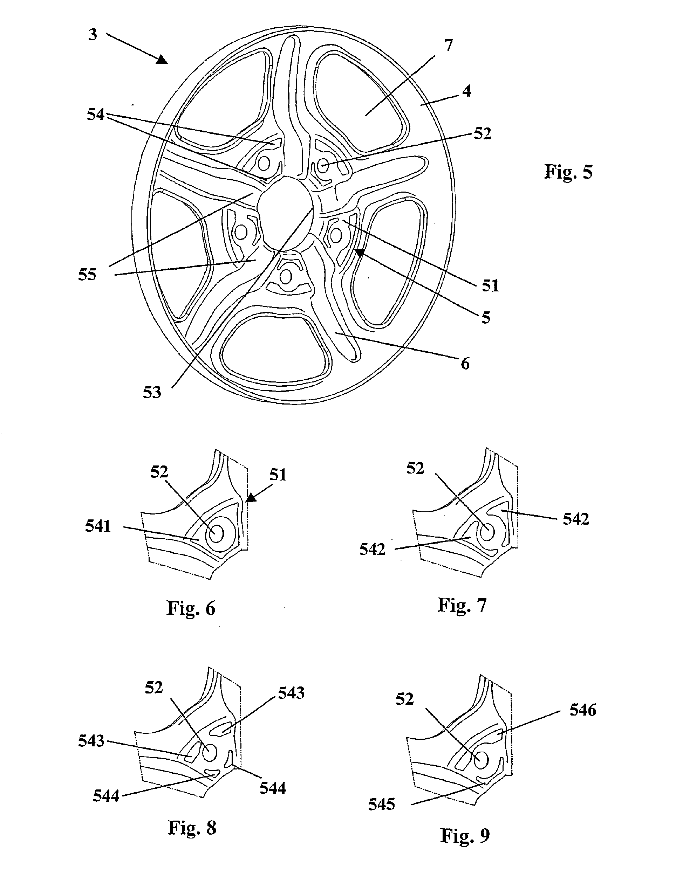

La figure 5 présente une vue en perspective de la face interne d'un exemple de réalisation du disque 3 selon l'invention. On voit en particulier la partie de fixation et de centrage 5 comprenant les cinq zones d'appui 51 disposées autour des cinq trous de fixation 52, les cinq pontets 55 et la cheminée de centrage 53.

Les figures 6 à 9 présentent quatre modes de réalisation particuliers des faces d'appui 54 des zones d'appui 51. La figure 6 illustre un premier mode dans lequel la face d'appui 541 est unique et entoure le trou de fixation 52. A la figure 7, la face d'appui est composée de deux faces 542 disposées circonférentiellement de part et d'autre du trou de fixation 52. A la figure 8, la face d'appui est composée de quatre faces 543 et 544, deux faces 543 disposées circonférentiellement de part et d'autre et radialement extérieurement relativement à l'axe du trou de fixation 52 et deux faces 544 disposées circonférentiellement de part et d'autre et radialement intérieurement relativement à l'axe du trou de fixation 52. La face d'appui de la figure 9 comporte elle deux faces d'appui, une face 545 disposée radialement intérieurement relativement à l'axe du trou de fixation 52 et une face 546 disposée radialement extérieurement relativement à l'axe du trou de fixation 52. La géométrie des faces d'appui permet de répartir les zones de concentration de contrainte dans la zone d'appui et dans le cas particulier du disque 3 illustré ici, les modes de réalisation illustrés par les figures 7, 8 et 9 sont avantageux relativement à une seule face d'appui (figure 6). Mais ce sont les modes de réalisation des figures 8 et 9 qui sont préférentiels. En effet, ces deux configurations garantissent bien que les efforts de flexion transmis par les bras seront supportées par des zones d'appui précisément disposées radialement de part et d'autre de l'axe du trou de fixation 52.

Le pontet 55, tout en évitant une concentration de contrainte au droit du renflement 64, permet de répartir au mieux les efforts transmis par la flexion d'un bras 6 entre les différentes zones d'appui 541, 542, 543, 544, 554, 546 de deux trous de fixation 52, situées de part et d'autre du dit pontet 55.

## Revendications

1. Disque (3) de roue, notamment pour véhicule de tourisme, réalisé à partir d'une seule pièce en tôle emboutie, avec une face interne et une face externe et comprenant :
- une partie circulaire radialement extérieure d'assemblage (4) destinée à être liée à une jante (2),
- une partie radialement intérieure de fixation et de centrage (5) à un moyeu de roue avec une zone d'appui (51) comportant un nombre donné de trous de fixation (52) et terminée radialement intérieurement par un bord recourbé axialement extérieurement ou cheminée de centrage (53), et
- des bras (6) reliant lesdites parties intérieure (5) et extérieure (4), chaque bras (6) étant disposé sensiblement circonférentiellement entre deux trous de fixation (52) adjacents et les bords libres (42) radialement intérieurs de la partie circulaire radialement extérieure (4) définissant avec les bords libres latéraux des bras (61) des ajours (7),
**caractérisé en ce que**, pour renforcer mécaniquement chaque bras (6), la zone centrale de chacun des bras (6) est déformée pour ménager un renflement (64) en retrait axialement extérieurement relativement aux zones latérales (63) du bras du disque, ledit renflement (64) s'étendant radialement à partir de la cheminée de centrage (53) en incluant un pontet (55) de la partie radialement intérieure de fixation et de centrage (5), le long de la partie centrale desdits bras (6) et jusqu'à la partie circulaire extérieure d'assemblage (4) et dans lequel ledit pontet (55) est décalé axialement extérieurement relativement à la zone d'appui (51).

2. Disque selon la revendication 1, dans lequel, en considérant un plan axial médian entre deux trous de fixation (52) adjacents, la distance axiale (h) séparant la face interne desdits pontets (55) et la face interne (P) de ladite zone d'appui (51) est en tout point supérieure à l'épaisseur initiale (e) de la tôle constitutive du disque de roue.

3. Disque selon l'une des revendications 1 et 2, dans lequel lesdits bras (6) présentent des bords libres latéraux de découpe (62) retournés vers la face interne dudit disque.

4. Disque selon l'une des revendications 1 à 3, dans lequel, les bords libres radialement intérieurs (42) de la partie circulaire d'assemblage (4) sont rabattus vers la face interne dudit disque.

5. Disque selon l'une des revendications 1 à 4, dans lequel lesdits ajours (7) sont obtenus par découpe de ladite tôle puis par rabattement des bords (42, 62) vers la face interne du disque.

6. Disque selon l'une des revendications 1 à 5, dans lequel la section desdits bras (6) diminue continûment de ladite partie radialement intérieure (5) vers ladite partie circulaire radialement extérieure (4).

7. Disque selon l'une des revendications 1 à 6, dans lequel l'inertie de flexion desdits bras diminue continûment de ladite partie centrale (5) vers ladite partie extérieure (4).

8. Disque selon l'une des revendication 1 à 7, dans lequel ladite zone d'appui (51) présente autour de chaque trou de fixation (52) au moins deux faces d'appui (542, 543, 544, 545, 546) distinctes.

9. Disque selon la revendication 8, dans lequel lesdites deux faces d'appui (545, 546) distinctes sont disposées radialement de part et d'autre de l'axe dudit trou de fixation (52).

10. Disque selon la revendication 9, dans lequel l'une au moins des deux faces d'appui (545, 546) est constituée de deux faces d'appui (543, 544) disposées circonférentiellement de part et d'autre de l'axe dudit trou de fixation (52).

11. Disque selon l'une des revendications 1 à 10, dans lequel le fond (65) desdits renflements (64) présente des orifices découpés.

12. Disque selon l'une des revendications 1 à 11, dans lequel la forme finale des bras (6) et des ajours (7) est obtenue simultanément en une ou plusieurs opérations d'emboutissage.

13. Disque selon l'une des revendications 1 à 12, dans lequel, après avoir été découpés, les bords (42, 62) des ajours (7) sont ébavurés sur une pièce emboutie avant d'être rabattus.

14. Disque selon l'une des revendications 1 à 13, dans lequel le nombre de bras (6) est 3, 4, 5 ou 6.

15. Roue (1), notamment pour véhicule de tourisme, constituée par l'assemblage d'une jante (2) et d'un disque (3) selon l'une des revendications 1 à 14.

## Claims

1. Wheel disc (3), in particular for passenger car, formed from a single piece of embossed sheet metal, with an outer face and an inner face and comprising:
a radially outer circular mounting part (4) intended to be connected to a rim (2),
a radially inner part (5) for fixing and centering to a wheel hub with a bearing region (51) having a given number of fixing apertures (52) and ending radially inwardly with an edge bent down axially outwardly or centering vent (53), and
arms (6) connecting the inner (5) and outer parts (4), each arm (6) being disposed substantially circumferentially between two adjacent fixing apertures (52) and the radially inner free edges (42) of the radially outer circular part (4) defining perforations (7) with the lateral free edges of the arms (61),
**characterized in that**, in order to reinforce each arm (6) mechanically, the central region of each arm (6) is deformed to house a swelling (64) receding axially outwardly relative to the lateral regions (63) of the arms of the disc, the swelling (64) extending radially from the centering vent (53), including a yoke (55) of the radially inner part (5) for fixing and centering, along the central part of the arms (6) as far as the outer circular mounting part (4), and wherein the yoke (55) is offset axially outwardly relative to the bearing region (51).

2. Disc according to claim 1, wherein, taking into account a median axial plane between two adjacent fixing apertures (52), the axial distance (4) separating the internal face of the yokes (55) and the internal face (P) of the bearing region (51) is at all points greater than the initial thickness (e) of the sheet metal forming the wheel disc.

3. Disc according to claim 1 or 2, wherein the arms (6) have free lateral cut-out edges (62) folded down towards the inner face of the disc.

4. Disc according to any one of claims 1 to 3, wherein the radially inner free edges (42) of the circular mounting part (4) are folded down towards the inner face of the disc.

5. Disc according to any one of claims 1 to 4, wherein the perforations (7) are obtained by cutting out the sheet metal and then folding down the edges (42, 62) towards the inner face of the disc.

6. Disc according to any one of claims 1 to 5, wherein the section of the arms (6) decreases continuously from the radially inner part (5) towards the circular radially outer part (4).

7. Disc according to any one of claims 1 to 6, wherein the bending resistance of the arms decreases from the central part (5) towards the outer part (4).

8. Disc according to any one of claims 1 to 7, wherein the bearing region (51) has around each fixing aperture (52) at least two distinct bearing faces (542, 543, 544, 545, 546).

9. Disc according to claim 8, wherein the two distinct bearing faces (545, 546) are disposed radially on either side of the axis of the fixing aperture (52).

10. Disc according to claim 9, wherein at least one of the two bearing faces (545, 546) is formed of two bearing faces (543, 544) disposed circumferentially on either side of the fixing aperture (52).

11. Disc according to any one of claims 1 to 10, wherein the base (65) of the swellings (64) has cut-out apertures.

12. Disc according to any one of claims 1 to 11, wherein the final shape of the arms (6) and of the perforations (7) is obtained simultaneously in one or more embossing operations.

13. Disc according to any one of claims 1 to 12, wherein, after being cut out, the edges (42, 62) of the perforations (7) are trimmed on an embossed part before being folded back.

14. Disc according to any one of claims 1 to 13, wherein the number of arms (6) is three, four, five or six.

15. Wheel (1), in particular for a passenger car, formed by assembling a rim (2) and a disc (3) according to any one of claims 1 to 14.

## Patentansprüche

1. Scheibe (3) eines Rads, insbesondere für einen Personenkraftwagen, die aus einem einzigen Stück tiefgezogenen Blechs hergestellt ist, mit einer Innenfläche und einer Außenfläche, und die umfasst:
- ein radial äußeres rundes Montageteil (4), das zur Verbindung mit einer Felge (2) bestimmt ist,
- ein radial inneres Teil (5) zur Befestigung und zur Zentrierung an einer Radnabe mit einer Stützzone (51), die eine gegebene Anzahl von Befestigungslöchern (52) aufweist und radial innen mit einem axial außen umgebogenen Rand bzw. einem Zentrierflansch (53) abschließt, und
- Arme (6), die das innere Teil (5) und das äußere Teil (4) verbinden, wobei jeder Arm (6) im Wesentlichen umlaufend zwischen zwei benachbarten Befestigungslöchern (52) angeordnet ist und die radial inneren freien Kanten (42) des radial äußeren runden Teils (4) mit den seitlichen freien Kanten (61) der Arme Öffnungen (7) festlegen,
**dadurch gekennzeichnet, dass,** um jeden Arm (6) mechanisch zu verstärken, die zentrale Zone jedes der Arme (6) verformt ist, um eine Ausbauchung (64) anzubringen, die axial außen in Bezug auf die seitlichen Zonen (63) des Arms der Scheibe zurückgezogen ist, wobei sich die Ausbauchung (64) radial vom Zentrierflansch (53) aus erstreckt und ein brückenförmiges Teil (55) des radial inneren Teils (5) zur Befestigung und zur Zentrierung einschließt, und zwar entlang dem zentralen Teil der Arme (6) und bis zum äußeren runden Montageteil (4), und wobei das brückenförmige Teil (55) axial außen in Bezug auf die Stützzone (51) versetzt ist.

2. Scheibe nach Anspruch 1, bei welcher, unter Berücksichtigung einer mittleren axialen Ebene zwischen zwei benachbarten Befestigungslöchern (52), die axiale Entfernung (h), welche die Innenfläche der brückenförmigen Teile (55) und die Innenfläche (P) der Stützzone (51) trennt, an jedem Punkt größer ist als die anfängliche Dicke (e) des der Radscheibe zugrundeliegenden Blechs.

3. Scheibe nach Anspruch 1 oder 2, bei welcher die Arme (6) seitliche freie Schnittkanten (62) aufweisen, die der Innenfläche der Scheibe zugekehrt sind.

4. Scheibe nach einem der Ansprüche 1 bis 3, bei welcher die radial inneren freien Kanten (42) des runden Montageteils (4) zur Innenfläche der Scheibe umgebogen sind.

5. Scheibe nach einem der Ansprüche 1 bis 4, bei welcher die Öffnungen (7) erhalten werden, indem das Blech zugeschnitten und dann die Kanten (42, 62) zur Innenfläche der Scheibe umgebogen werden.

6. Scheibe nach einem der Ansprüche 1 bis 5, bei welcher sich der Querschnitt der Arme (6) vom radial inneren Teil (5) zum radial äußeren runden Teil (4) fortlaufend verringert.

7. Scheibe nach einem der Ansprüche 1 bis 6, bei welcher sich das Biegeträgheitsmoment der Arme vom zentralen Teil (5) zum äußeren Teil (4) fortlaufend verringert.

8. Scheibe nach einem der Ansprüche 1 bis 7, bei welcher die Stützzone (51) um jedes Befestigungsloch (52) zumindest zwei unterschiedliche Stützflächen (542, 543, 544, 545, 546) aufweist.

9. Scheibe nach Anspruch 8, bei welcher die beiden unterschiedlichen Stützflächen (545, 546) radial beiderseits der Achse des Befestigungslochs (52) angeordnet sind.

10. Scheibe nach Anspruch 9, bei welcher zumindest eine der beiden Stützflächen (545, 546) von zwei Stützflächen (543, 544) gebildet wird, die umlaufend beiderseits der Achse des Befestigungslochs (52) angeordnet sind.

11. Scheibe nach einem der Ansprüche 1 bis 10, bei welcher der Boden (65) der Ausbauchungen (64) ausgeschnittene Öffnungen aufweist.

12. Scheibe nach einem der Ansprüche 1 bis 11, bei welcher die endgültige Form der Arme (6) und der Öffnungen (7) simultan in einem oder mehreren Tiefziehvorgängen erhalten wird.

13. Scheibe nach einem der Ansprüche 1 bis 12, bei welcher die Kanten (42, 62) der Öffnungen (7), nachdem sie zugeschnitten worden sind, auf einem Tiefziehteil entgratet werden, bevor sie umgebogen werden.

14. Scheibe nach einem der Ansprüche 1 bis 13, bei welcher sich die Anzahl der Arme (6) auf 3, 4, 5 oder 6 beläuft.

15. Rad (1), insbesondere für einen Personenkraftwagen, das durch Zusammenfügen einer Felge (2) und einer Scheibe (3) nach einem der Ansprüche 1 bis 14 gebildet wird.
